# EUROPÄISCHE PATENTSCHRIFT

(11) **EP 4 126 387 B1**
(45) Veröffentlichungstag und Bekanntmachung des Hinweises auf die Patenterteilung: **06.03.2024**
(21) Anmeldenummer: 21713975.7
(22) Anmeldetag: 25.03.2021
(51) Int. Cl.: B05B 15/65, B05B 13/04, B25J 15/04, B25J 19/00

(54) **ZERSTÄUBERWECHSELSYSTEM FÜR MEHRACHSIGE HOLLOW-WRIST-BESCHICHTUNGSROBOTER**
ATOMISER CHANGING SYSTEM FOR MULTI-AXIS HOLLOW-WRIST COATING ROBOTS
SYSTÈME DE CHANGEMENT DE PULVÉRISATEUR POUR ROBOTS DE REVÊTEMENT À POIGNET CREUX À PLUSIEURS AXES

(30) Priorität: 25.03.2020 EP 20165481
(43) Veröffentlichungstag der Anmeldung: 08.02.2023
(73) Patentinhaber: BASF Coatings GmbH, 48165 Münster (DE); Poma Sytems GmbH, 36148 Kalbach (DE)
(72) Erfinder: HOLTMANN, Matthias, 48165 Münster (DE); KUENZ, Marc, 48165 Münster (DE); BEMMANN, Sven, 97080 Wuerzburg (DE); ROSENDAHL, Klaus, 48165 Münster (DE); PULS, Daniel, 36148 Kalbach (DE); MATHIAK, Wolf-Ruediger, 36148 Kalbach (DE); BALZER, Felix, 36148 Kalbach (DE)
(74) Vertreter: BASF IP Association
(86) Internationale Anmeldenummer: PCT/EP2021/057812
(87) Internationale Veröffentlichungsnummer: WO 2021/191383

(56) Entgegenhaltungen:
- DE-A1-102009 013 979
- DE-A1-102012 022 535
- US-A1- 2009 108 109
- US-B1- 6 349 884

## Beschreibung

Die Erfindung betrifft ein Zerstäuberwechselsystem, welches vorzugsweise vollautomatisch Hochrotations- und Pneumatik-Zerstäuber an mehrachsigen Hollow-Wrist-Beschichtungsrobotern wechseln kann.

### TECHNOLOGISCHER HINTERGRUND

Beim Beschichten beziehungsweise Lackieren von hochwertigen Bauteilen, wie es unter anderem in der Automobilindustrie üblich ist, werden hohe Anforderungen an die Beschichtung gestellt. Diese können mit einem einzigen Beschichtungsstoff nicht abgebildet werden, sondern es bedarf hier eines Beschichtungssystems, bestehend aus mehreren Schichten, wobei jede Schicht eine definierte Aufgabe erfüllt. So ist es üblich, dass im Automobilsektor Drei- bis Vierschicht-Aufbauten eingesetzt werden. Solche Mehrschichtbeschichtungssysteme bestehen in der Regel aus einem Primerbeschichtungsmittel, mindestens einem Basislack und mindestens einem (2-Komponenten-)Klarlack. Jedes dieser Beschichtungsmittel wird in der Regel, aufgrund unterschiedlicher Beschaffenheit und unterschiedlicher zu erzielender Applikationsschichtdicke, mit unterschiedlichen Zerstäubern appliziert. Zudem spielt die Zusammensetzung der Beschichtungsmittel eine erhebliche Rolle. So existieren beispielsweise wasserbasierte oder lösemittelbasierte Basislacke, während typische 2-Komponenten-Klarlacke lösemittelhaltig sind. Der Wechsel zwischen wasserbasierten und lösemittelhaltigen Beschichtungsstoffen ist nach erfolgtem Lackiervorgang ohne vorhergehende Reinigung der Applikationsvorrichtung nicht möglich, da der Kontakt zwischen den Beschichtungsstoffen oder ein Vermischen dieser in der Regel zu unerwünschten Reaktionen führt.

Ein weiteres Applikationsproblem besteht darin, dass Hochrotationszerstäuber den pneumatischen Zerstäubern bezüglich der Erreichbarkeit schwer zugänglicher Flächen unterlegen sind, da diese im konstruktiven Aufbau deutlich größer sind.

Der manuelle Umbau eines Roboters auf den jeweiligen Zerstäuber ist, aufgrund der Rüstzeit und dem damit verbundenen Stillstand des Lackiervorgangs in der LackierKabine beziehungsweise der gesamten Lackierstraße, zu vermeiden. Aus diesem Grund wird in der Regel für jeden einzelnen Zerstäuber ein separater Roboter benötigt.

Bekannt sind Werkzeugwechselsysteme für sogenannte Handling-Roboter. Diese bestehen aus einem zentrisch angeordneten Spannelement, um das das am Werkzeug befindliche Kupplungselement (Slave) mit dem am Roboter befindlichen Kupplungselement (Master) greifen und verriegeln zu können. Um dieses Spannelement sind, je nach Anforderung, verschiedene Module angebracht, um die zur Funktion des Werkzeugs benötigten Stoff-, Energie- und Informationsströme zu kuppeln. Diese Kupplungssysteme sind durchgängig aus leitfähigen Materialien und können deshalb nicht im Hochspannungsbereich verbaut werden. Sie sind für den Einsatz an einem Handling-Roboter ohne sogenannten Hollow-Wrist etabliert.

Auch aus dem Bereich der Lackiertechnik sind bereits vollautomatische Zerstäuberwechselsysteme bekannt (Prauser & Brinckmann in: Journal für Oberflächentechnik 2013(7) 20-21). Diese bestehen aus einer roboterseitigen Masterplatte, über die verschiedene Slaveplatten aufgenommen werden können, an welchen die Zerstäuber mechanisch montiert und verschlaucht sind. Die Slave-Einheiten befinden sich in Wechselstationen innerhalb einer Lackierkabine. So kann ein Roboter vollautomatisch die Zerstäuber wechseln. Das Wechselsystem kann alle für den Betrieb eines Hochrotationszerstäubers notwendigen Medien und Signale kuppeln und ist für den Betrieb von Zerstäubern mit Außen- und Innenaufladung sowie Lackierpistolen geeignet. Auch hier befindet sich das eigentliche Spannelement, ähnlich wie im zuvor beschriebenen Werkzeugwechselsystem, im Zentrum, während die eigentlichen Kuppelstellen für Stoffe, Energie und Informationen außen angeordnet sind. Diese Anordnung nimmt viel Raum in Anspruch, was sich negativ auf die gesamte Kinematik auswirkt. Zudem sind im oben genannten Zerstäuberwechselsystem Komponenten wie Kupplungen, Spannsystem, Halterungen etc. metallisch ausgeführt, was zu unerwünschten Nebeneffekten im Betrieb unter Hochspannung (freie Kapazitäten) führen kann. Des Weiteren ist die gesamte Schlauchführung der Slaveeinheit offen und weitestgehend ungeschützt, wodurch die gesamte Einheit anfällig für Verschmutzung durch Overspray ist.

Im Anwendungsbereich der KFZ-Lackierung sind sogenannte und bereits vorstehend erwähnte "Hollow Wrist"-Lackierroboter in vielfachem Einsatz. Diese weisen typischerweise vier, fünf oder sechs Achsen auf und besitzen die Besonderheit, dass die Leitungen für Stoffe, Energie und Informationen durch das "hohle Handgelenk" ("Hollow Wrist") des Roboters geführt werden und somit der Verschmutzung durch Overspray unzugänglich sind. Zudem ermöglicht es die "schlanke" Konstruktion auch Stellen des zu lackierenden Gutes zu erreichen, die bei einer Außenführung der Leitungen nicht zugänglich wären. Der Zerstäuberwechsel an derartigen mehrachsigen Hollow-Wrist-Lackierrobotern ist jedoch bisher aufwändig, insbesondere zeitaufwändig und nur manuell durchführbar.

US 6,349,884 B1 betrifft ein Verfahren und eine Vorrichtung zur Montage einer Unterbaugruppe, die mindestens eine Sprühvorrichtung zum Sprühen von Beschichtungsmaterial auf einem beweglichen Teil eines Roboters umfasst.

Der Erfindung liegt die Aufgabe zu Grunde ein Zerstäuberwechselsystem bereitzustellen, welches die Nachteile des Standes der Technik nicht aufweist und insbesondere bei Zerstäubern mit größerem Platzbedarf diesen Platz optimal nutzt und somit vor allem bei komplexen dreidimensionalen zu lackierenden Substraten die Erreichbarkeit der zu lackierenden Oberflächen verbessert. Zugleich soll eine äußere Anschmutzung der die Stoffe, Energie und Informationen führenden Leitungen beispielsweise durch Overspray, minimiert. Eine geringere Anschmutzung der Leitungen soll es so ermöglichen, dass die Wechselzeiten zwischen verschiedenen Zerstäubern reduziert werden und auch die Gefahr der Kontamination nachfolgender Lackschichten durch außenliegende angeschmutzte Schläuche und Leitungen verringert wird.

Darüber hinaus soll das Zerstäuberwechselsystem einen schnellen, vollautomatischen Wechsel zwischen verschiedenen Zerstäubern und somit auch verschiedenen Beschichtungsmittelsystemen ermöglichen. Auch soll die Zahl der für eine Mehrschichtlackierung erforderlichen Lackierrroboter reduziert werden, indem ein Lackierroboter, in raschem Wechsel, mit unterschiedlichen Zerstäubern ausgestattet werden kann. Dies erlaubt die Applikation verschiedener Beschichtungsmittel wie beispielsweise wässriger oder lösemittelbasierter, Ein- oder Zweikomponenten-Beschichtungsmittel.

Besonders vorteilhaft soll sich das Zerstäuberwechselsystem mit unterschiedlichen Zerstäubern wie beispielsweise Hochrotationszerstäubern und pneumatischen Zerstäubern verwenden lassen. Vorzugsweise sollte jede übliche Art von Zerstäubern einsetzbar sein.

Das Zerstäuberwechselsystem soll an einem mehrachsigen Lackierroboter verwendbar sein, so dass der Lackierroboter, ohne das Eingreifen des Menschen, in der Lage ist, den Zerstäuber selbstständig zu wechseln.

### BESCHREIBUNG

Oben genannte Aufgaben konnten durch die Bereitstellung eines Zerstäuberwechselsystems für einen mehrachsigen Hollow-Wrist-Beschichtungsroboter gelöst werden, wobei das Zerstäuberwechselsystem eine Master-Einheit (1) und mindestens eine Slave-Einheit (2) umfasst, und wobei
die Master-Einheit (1) wenigstens folgende Bauteile aufweist:
   ein das Zentrum der Master-Einheit (1) umgebendes, lösbares masterseitiges Verbindungselement (1.1) zur kraftschlüssigen und
   formschlüssigen Verbindung (KS, FS) der Master-Einheit (1) mit der Slave-Einheit (2),
   eine im Zentrum der Master-Einheit (1) angeordnete masterseitige Kupplungsplatte (1.2) mit einer Mehrzahl von Kupplungsstellen für die Versorgung eines daran anschließbaren Zerstäubers mit Stoffen, Energie und/oder Informationen, und
   einen Adapter (1.3) zum Anschluss der Master-Einheit (1) an einen Hollow-Wrist eines Beschichtungsroboters; und wobei
die Slave-Einheit (2) wenigstens folgende Bauteile aufweist:
   eine slaveseitige Kupplungsplatte (2.2) zum Anschluss der Slave-Einheit (2) an die Master-Einheit (1) und an einen Zerstäuber, wobei die slaveseitige Kupplungsplatte (2.2) zerstäuberseitig mit Leitungen und/oder einer Adapterplatte für die Versorgung des anschließbaren Zerstäubers mit Stoffen, Energie und/oder Informationen fest verbunden ist; und
   ein slaveseitiges lösbares Verbindungselement (2.4) zur Verbindung der Slave-Einheit (2) mit einem Zerstäuber.

Im Folgenden wird das Zerstäuberwechselsystem als erfindungsgemäßes Zerstäuberwechselsystem bezeichnet.

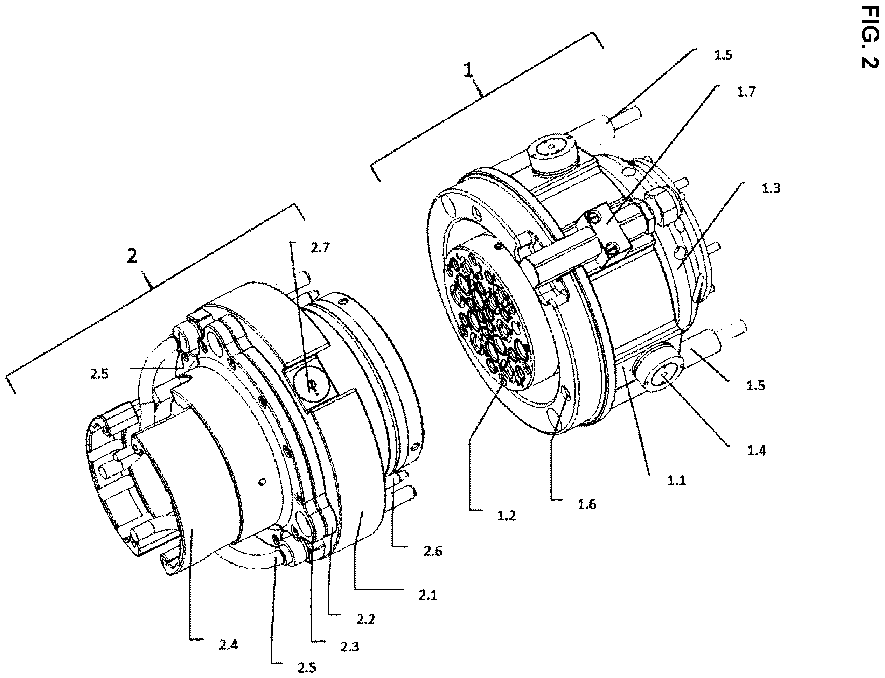

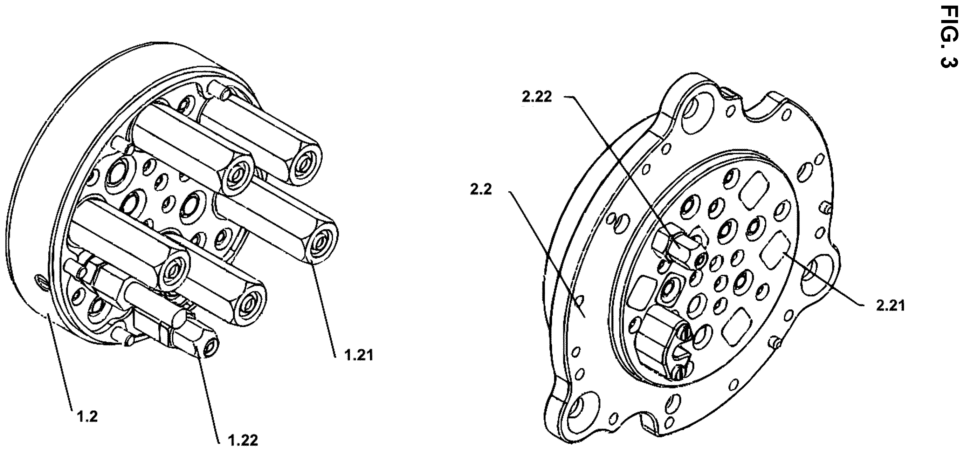

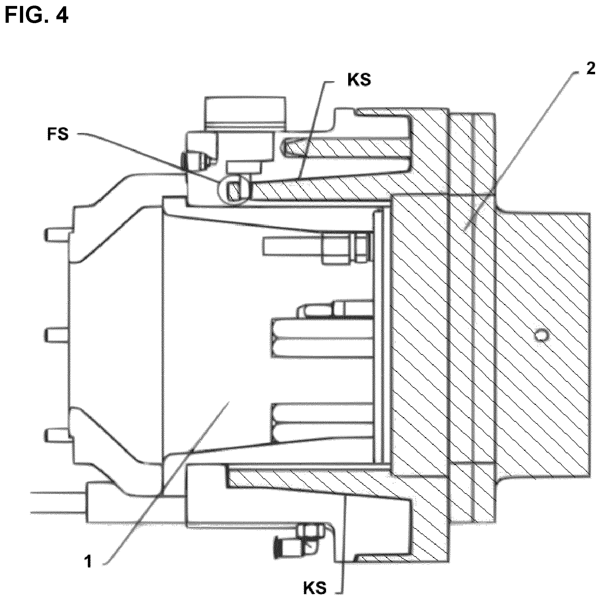

Fig. 2 und 3 zeigen exemplarisch den Aufbau des Zerstäuberwechselsystems (Fig. 2) bzw. die Konstruktion der Kupplungsplatten (Fig. 3: 1.2, 2.2). Fig. 4 veranschaulicht die kraftschlüssige (KS) und formschlüssige (FS) der Master-Einheit (1) mit der Slave-Einheit (2).

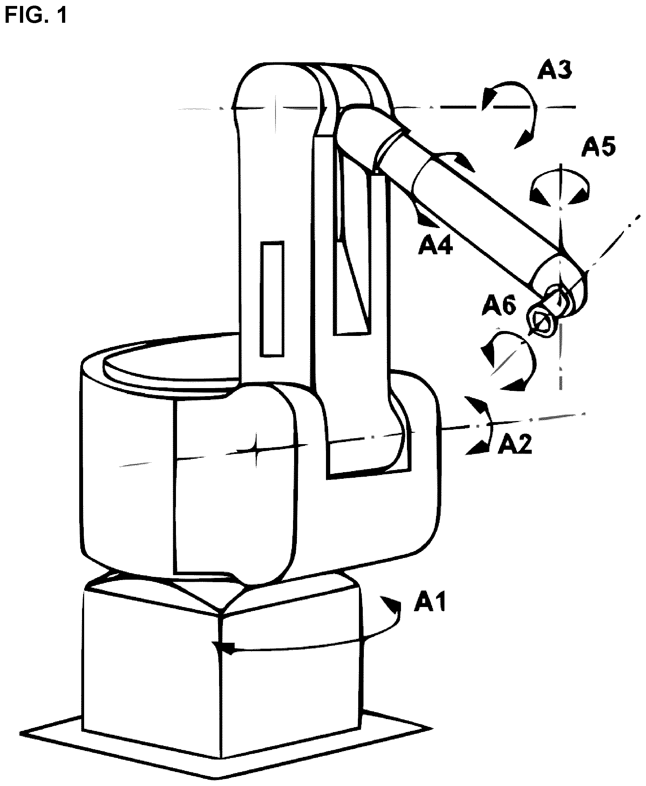

Bei den mehrachsigen Beschichtungsrobotern handelt es sich um solche mit einem "Hollow-Wrist", das heißt einem "hohlen Handgelenk". Durch diesen können sämtliche zur Versorgung des Zerstäubers benötigten Leitungen geführt werden. Ein typischer mehrachsiger Beschichtungsroboter ist beispielsweise in Fig. 1 dargestellt (aus: D. Ondratschek (Hrsg.), Jahrbuch Besser Lackieren 2008, 65. Auflage), worin dieser als 6-achsiger Beschichtungsroboter ausgeführt ist. Die sechs Achsen sind in Fig. 1 mit A1 bis A6 gekennzeichnet.

Mehrachsige Hollow-Wrist-Beschichtungsroboter besitzen vorzugsweise vier, fünf, sechs oder mehr Achsen. Besonders bevorzugt handelt es sich im Rahmen der Erfindung um sechsachsige Hollow-Wrist-Beschichtungsroboter.

Während bei den aus dem Stand der Technik bekannten mehrachsigen Beschichtungsrobotern die zur Versorgung des Zerstäubers benötigten Leitungen für Stoffe, Energie und/oder Informationen außen am Roboterarm entlanggeführt werden und daher sowohl der Raumbedarf als auch die Anschmutzungsneigung erhöht sind, erlaubt es das erfindungsgemäße Zerstäuberwechselsystem, ohne festen Verbau aller Leitungen vom Hollow-Wrist bis zum Zerstäuber, verschiedenste Arten an Zerstäubern auf einfache Art und Weise, sowohl manuell, vorzugsweise jedoch vollautomatisch anzubringen beziehungsweise zu wechseln.

Dies gelingt dadurch, dass die Master-Einheit (1) des erfindungsgemäßen Zerstäuberwechselsystems über einen Adapter (1.3) fest mit dem Hollow-Wrist des Beschichtungsroboters verbunden wird und die Master-Einheit so ausgestaltet ist, dass diese einen im Zentrum des Querschnitts angeordnete masterseitige Kupplungsplatte (1.2) aufweist, welche eine Mehrzahl von Kupplungsstellen aufweist, die der Versorgung des Zerstäubers mit Stoffen, Energie und/oder Informationen dienen. Roboterseitig werden die hierfür erforderlichen Leitungen fest mit der masterseitigen Kupplungsplatte (1.2) verbunden.

Anders als bei Master-Slave-Wechselvorrichtungen für typische Handling-Roboter, umgibt der zur Verbindung bzw. Verriegelung der Master-Einheit (1) mit der Slave-Einheit (2) erforderliche Verbindungs- bzw. Verriegelungsmechanismus (KS, FS) im erfindungsgemäßen Zerstäuberwechselsystem die masterseitige Kupplungsplatte (1.2) und ist somit nicht innenliegend, sondern außenliegend.

Der Verbindungs- bzw. Verriegelungsmechanismus ist sowohl kraftschlüssig (KS) als auch formschlüssig (FS) ausgeführt.

Das lösbare masterseitige Verbindungselement (1.1), welches das Zentrum der Master-Einheit (1) umgibt und die kraft- und formschlüssige Verbindung (KS, FS) der Master-Einheit (1) mit der Slave-Einheit (2) ermöglicht, ist vorzugsweise als Flansch, besonders bevorzugt als Kegelflansch ausgebildet.

Aus der erfindungsgemäßen Konstruktion und insbesondere durch eine bevorzugte zusätzliche Verschachtelung der masterseitigen Kupplungsplatte (1.2) mit der slaveseitigen Kupplungsplatte (2.2) folgt auch eine radiale Erhöhung der Durchschlagfestigkeit. Das sich im Zusammenwirken von masterseitigen Kupplungsplatte (1.2) und slaveseitigen Kupplungsplatte (2.2) ergebende Labyrinth aus Isolationswandungen bildet verlängerte Wege für etwaige Kriechströme und ist daher eine besonders wirksame Isolationsmaßnahme, die in vorteilhafter Weise zur Verbesserung der Betriebssicherheit beiträgt.

Zum anderen sind alle Leitungen für Stoffe, Energie und Informationen im Master (1), was die Flexibilität und Erreichbarkeit der Zerstäuber erhöht, und die Reinigung des Systems vereinfacht.

Da die masterseitige Kupplungsplatte (1.2) möglichst eine universelle Eignung für die verschiedensten Zerstäuber, von pneumatischen Zerstäubern bis hin zu Hochrotationszerstäubern besitzen soll, weist diese eine Mehrzahl von Kupplungsstellen für die Versorgung des jeweiligen Zerstäubers mit Stoffen, Energie und/oder Informationen auf. Somit ist auch das Kuppeln der notwendigen Medien, beispielsweise direktaufgeladenen, leitfähigen Medien möglich.

Besonders bevorzugt umfasst die masterseitige Kupplungsplatte (1.2) Kupplungsstellen für Beschichtungsmittelleitungen, insbesondere solche die für einen Betrieb mit oder ohne Hochspannung ausgelegt sind, Kupplungsstellen für pneumatische Leitungen insbesondere zur Versorgung mit Turbinenlüften, Lagerluft, Lagerluftüberwachung, Lenklüfte, Steuerlüfte, Mikrofonlüfte, Purgeluft, Luft zur Wärmeisolierung und Bremsluft, sowie Kupplungsstellen für Lichtwellenleiter.

In einer ganz besonders bevorzugten Ausführungsform weist die Master-Kupplungsplatte (1.2) mindestens 28 Kuppelstellen auf, davon zwei medienführende Leitungen für den Betrieb ohne Hochspannung, fünf medienführende Leitungen für den Betrieb unter Hochspannung, zwanzig pneumatische Leitungen für Turbinenlüfte, Lagerluft, Lagerluftüberwachung, Lenklüfte, Steuerlüfte, Microfonlüfte, Purgeluft, Luft zur Wärmeisolierung, Bremsluft sowie eine Lichtwellenleiterkupplung.

Die als Lagerluftverschraubung (Fig. 3: 1.22, 2.22) ausgeführte, während des Betriebs dauerhaft mit Druckluft beaufschlagte Kupplungsstelle ist vorzugsweise so ausgeführt, dass diese erst beim Verbinden der Master-Einheit (1) mit der Slave-Einheit (2) geöffnet wird. Das garantiert, dass die permanent an der Master-Einheit (1) anstehende Lagerluft nicht unkontrolliert entweichen kann, wodurch Kosten und Ressourcen eingespart werden können.

Das erfindungsgemäße Zerstäuberwechselsystem kann auch im Hochspannungsbetrieb mit entsprechenden Zerstäubern bis etwa 100 kV eingesetzt werden, ohne dass der Horizontalarm des Roboters isoliert ausgeführt werden muss. Das erfindungsgemäße Zerstäuberwechselsystem erlaubt die Verwendung des Zerstäuberwechselsystems gemäß den Anforderungen der EU-Richtlinien ATEX-Produktrichtlinie 2014/34/EU und für die ATEX Zone II 3G T3.

Vorzugsweise besteht das erfindungsgemäße Zerstäuberwechselsystem im Wesentlichen aus einem elektrisch nicht leitfähigen Kunststoff. Geeignete Kunststoffe sind beispielsweise Polyoxymethylen (POM) und Polyetheretherketon (PEEK). Hierbei ist es möglich die Slave-Einheit (2) komplett aus dem elektrisch nicht leitfähigen Kunststoff zu fertigen und die Master-Einheit (1) zumindest weitestgehend aus dem nicht leitfähigen Kunststoff zu fertigen. So enthält die Master-Einheit vorzugsweise weniger als 5 Gew.-%, besonders bevorzugt weniger als 3 Gew.-% und ganz besonders bevorzugt weniger als 2 Gew.-% an metallischen Bauteilen. Enthält die Master-Einheit (1) metallische Bauteile, so handelt es sich hierbei in der Regel um Steckverschraubungen; Hochspannungs-Kontakte, Erdungs-Kontakte, und Fangzylinder (z.B. Feder und Kolben). Trotz der gewichtsreduzierten Konstruktion unter Verwendung elektrisch nicht leitfähiger Kunststoffe, ermöglicht eine derartige Ausführung die sichere Adaptierung von Zerstäuber bis zu einem Gewicht von mindestens 10 kg aber durchaus auch höheren Gewichten wie beispielsweise bis zu 13 kg, bis zu 15 kg oder höher.

Es ist vorteilhaft den Schwerpunkt des Zerstäuberwechselsystems (inklusive des Zerstäubers) möglichst nahe am Hollow-Wrist des Beschichtungsroboters zu platzieren. Um dies zu erreichen, ist es bevorzugt die Master-Einheit (1) so kurz wie möglich auszuführen. Allerdings erfordert eine hochspannungsfeste Ausrüstung, dass bestimmte Isolierstrecken eingehalten werden. Diese Isolierstrecken liegen in der Regel zwischen 1,8 und 2,1 mm/kV und haben somit einen starken Einfluss auf die Bauteildimensionierung. Um die Isolierstrecken möglichst gering zu halten, ist es bevorzugt, dass alle medienführenden Leitungen, das heißt die beschichtungsmittelführenden Leitungen hochspannungsfeste Verschraubungen (1.21, 2.21) besitzen.

Die masterseitige Hochspannungsverschraubung (1.21) weist, bis zu einer bestimmten Spannung, eine gewisse Festigkeit für mögliche Kriechströme bzw. Durchschläge auf. Dabei wird bei der Kombination Mutter/Medienleitung/Verschraubung im fertig montierten Zustand zum einen die Kriechstromlänge erhöht, zum anderen vorzugsweise der Hohlraum zwischen Mutter/ Medienleitung/Verschraubung mit einem elektrisch isolierenden Stoff befüllt. Für eine Befüllung geeignete elektrisch isolierende Stoffe müssen LABS-Konformität gemäß VDMA 24364:2018-05 aufweisen (LABS = lackbenetzungsstörende Substanzen). Hierzu zählen entsprechend konforme Spezialfette und entsprechend konforme Vaseline.

Die beschriebene Verschraubung (1.21) besitzt vorzugsweise eine Durchschlags- bzw. Kriechstromfestigkeit von etwa 50 KV, wodurch die Isolierstrecke halbiert werden kann.

Die Verschraubungen (1.21, 2.21) für Medien im Allgemeinen sind vorzugsweise totraumfrei ausgeführt, um den Reinigungsprozess beziehungsweise das vollständige Evakuieren der mit flüssigen Medien gefüllten Leitungen in kürzester Zeit realisieren zu können.

Die Slave-Einheit (2) ist an den jeweiligen Zerstäuber angepasst, die Schnittstelle zum Zerstäuber bildet hierbei die slaveseitige Kupplungsplatte (2.2) und ein slaveseitiges lösbares Verbindungselement (2.4), wobei letzteres vorzugsweise als Flansch (2.4) ausgebildet ist.

Die Kupplungsplatte (2.2) der Slave-Einheit (2) weist zerstäuberseitig Leitungen und/oder eine vorzugsweise im 3D-Druckverfahren hergestellte Adapterplatte für Stoffe, Energie und Information auf und ist fest mit dem Zerstäuber verbunden. Die Slave-Kupplungsplatte (2.2) ist dabei mit allen für den Betrieb des jeweiligen Zerstäubers notwendigen Kupplungsstellen besetzt.

Die Slave-Einheit (2) ist vorzugsweise so ausgeführt, dass diese das Kupplungsmännchen des Zerstäuberwechselsystems darstellt. Das heißt, dass sich die verschleißempfindlichen Dichtelemente in der Slave-Einheit (2) befinden. Hierdurch kann eine maximale Verfügbarkeit des Wechselsystems erreicht werden.

Vorzugsweise verfügt die Slave-Einheit (2) über einen Datenträger (2.7), der von der Master-Einheit (1) jeder Zeit abgefragt werden kann. Hierzu dient eine vorzugsweise an der Master-Einheit (1) befindliche Leseeinheit (1.7).

Der Datenträger (2.7) kann auch dazu dienen, dass die mit dem Zerstäuber verbundene Slave-Einheit (2) zur Ablage in oder Entnahme aus einem Magazin bzw. einer Wechselstation erkannt wird.

Neben dem vollautomatischen Wechsel der Zerstäuber sowie der Ablage in oder Entnahme aus einem Magazin bzw. einer Wechselstation, ist es jedoch auch möglich den mit der Slave-Einheit (2) verbundenen Zerstäuber von Hand am Roboter zu wechseln, ohne dass ein Magazin beziehungsweise eine Wechselstation angefahren werden muss.

Eine praktisch realisierte Ausführung des erfindungsgemäßen Zerstäuberwechselsystems ist den Figuren 2 bis 4 entnehmbar.

### Bezugszeichenliste

- 1:: Master-Einheit
- 1.1:: Masterseitiges lösbares Verbindungselement (Kegelflansch) zur kraft- und formschlüssigen Verbindung der Master-Einheit (1) mit der Slave-Einheit (2)
- 1.2:: Masterseitige Kupplungsstellen an der Master-Einheit (1)
- 1.21:: (hochspannungsfeste) Verschraubung an der Master-Einheit (1)
- 1.22:: Lagerluftverschraubung an der Master-Einheit (1)
- 1.3:: Adapter zum Anschluss der Master-Einheit (1) an den Hollow-Wrist eines Beschichtungsroboters
- 1.4:: formschlüssig ausgeführter Fangzylinder
- 1.5:: masterseitige Kupplung für Hochspannung bzw. Erde
- 1.6:: Zentrierbuchse bzw. -bohrung (um die Slave-Einheit beim Kuppeln zu zentrieren)
- 1.7:: Leseeinheit für den Datenträger 2.7
- 2:: Slave-Einheit
- 2.1:: Slaveseitiges lösbares Verbindungselement (Kegelflansch) zur kraft- und formschlüssigen Verbindung der Master-Einheit (1) mit der Slave-Einheit (2)
- 2.2:: Slaveseitige Kupplungsplatte an der Slave-Einheit (1)
- 2.21:: (hochspannungsfeste) Verschraubung an der Slave-Einheit (2)
- 2.22:: Lagerluftverschraubung an der Slave-Einheit (2)
- 2.3:: Fangflansch (Zentrierung bzw. Möglichkeit des Fixierens der Slave-Einheit in der Wechselstation)
- 2.4:: Slaveseitiges lösbares Verbindungselement (Adapterflansch) zur Verbindung der Slave-Einheit (2) mit einem Zerstäuber
- 2.5:: slaveseitige Kupplung für Hochspannung bzw. Erde
- 2.6:: Zentrierdorne (um die Slave-Einheit beim Kuppeln zu zentrieren)
- 2.7:: Datenträger
- KS:: kraftschlüssige Verbindung
- FS:: formschlüssige Verbindung

## Patentansprüche

1. Zerstäuberwechselsystem, umfassend eine Master-Einheit (1) und mindestens eine Slave-Einheit (2), wobei
die Master-Einheit (1) wenigstens folgende Bauteile aufweist:
ein das Zentrum der Master-Einheit (1) umgebendes, masterseitiges Verbindungselement (1.1) zur kraftschlüssigen und formschlüssigen Verbindung (KS, FS) der Master-Einheit (1) mit der Slave-Einheit (2), und eine im Zentrum der Master-Einheit (1) angeordnete masterseitige Kupplungsplatte (1.2) mit einer Mehrzahl von Kupplungsstellen für die Versorgung eines daran anschließbaren Zerstäubers mit Stoffen, Energie und/oder Informationen; und wobei
die Slave-Einheit (2) wenigstens folgendes Bauteil aufweist:
ein slaveseitiges lösbares Verbindungselement (2.4) zur Verbindung der Slave-Einheit (2) mit einem Zerstäuber,
**dadurch gekennzeichnet, dass** das masterseitige Verbindungselement (1.1) lösbar ist, die Master-Einheit (1) einen Adapter (1.3) zum Anschluss der Master-Einheit (1) an einen Hollow-Wrist eines Beschichtungsroboters aufweist und die Slave-Einheit (2) eine slaveseitige Kupplungsplatte (2.2) zum Anschluss der Slave-Einheit (2) an die Master-Einheit (1) und an einen Zerstäuber aufweist, wobei die slaveseitige Kupplungsplatte (2.2) zerstäuberseitig mit Leitungen und/oder einer Adapterplatte für die Versorgung des anschließbaren Zerstäubers mit Stoffen, Energie und/oder Informationen fest verbunden ist.

2. Zerstäuberwechselsystem gemäß Anspruch 1, wobei die masterseitige Kupplungsplatte (1.2) eine Mehrzahl an Kupplungsstellen gewählt aus Kupplungsstellen für Beschichtungsmittelleitungen, Kupplungsstellen für pneumatische Leitungen und Kupplungsstellen für Lichtwellenleiter besitzt.

3. Zerstäuberwechselsystem gemäß Anspruch 2, wobei die Kupplungsstellen für Beschichtungsmittelleitungen, für einen Betrieb mit oder ohne Hochspannung ausgelegt sind und die Kupplungsstellen für pneumatische Leitungen zur Versorgung mit Turbinenlüften, Lagerluft, Lagerluftüberwachung, Lenklüften, Steuerlüften, Mikrofonlüften, Purgeluft, Luft zur Wärmeisolierung und Bremsluft dienen.

4. Zerstäuberwechselsystem gemäß Anspruch 3, wobei die Kupplungsstelle für die Lagerluft (1.22, 2.22) so ausgeführt ist, dass diese erst beim Verbinden der Master-Einheit (1) mit der Slave-Einheit (2) geöffnet wird.

5. Zerstäuberwechselsystem gemäß einem oder mehreren der Ansprüche 1 bis 4, wobei dieses im Wesentlichen aus einem elektrisch nicht leitfähigen Kunststoff besteht.

6. Zerstäuberwechselsystem gemäß Anspruch 5, wobei die Slave-Einheit (2) aus einem elektrisch nicht leitfähigen Kunststoff besteht und die Master-Einheit (1) zu mindestens 95 Gew.-%, bezogen auf das Gewicht der Master-Einheit (1), aus einem elektrisch nicht leitfähigen Kunststoff besteht.

7. Zerstäuberwechselsystem gemäß einem oder mehreren der Ansprüche 1 bis 6, wobei die Versorgung des Zerstäubers mit Beschichtungsmitteln über beschichtungsmittelführenden Leitungen erfolgt, die mit den Kupplungsplatten (1.2, 2.2) über hochspannungsfeste Verschraubungen (1.21, 2.21) verbunden sind.

8. Zerstäuberwechselsystem gemäß Anspruch 7, wobei die hochspannungsfesten Verschraubungen (1.21, 2.21) totraumfrei ausgeführt sind.

9. Zerstäuberwechselsystem gemäß einem oder mehreren der Ansprüche 1 bis 8, wobei die Slave-Einheit (2) einen Datenträger (2.7) umfasst, der von einer an der Master-Einheit (1) angebrachten Leseeinheit (1.7) auslesbar ist.

10. Zerstäuberwechselsystem gemäß einem oder mehreren der Ansprüche 1 bis 9, wobei die masterseitige Kupplungsplatte (1.2) und die slaveseitige Kupplungsplatte (2.2) so ausgeführt sind, dass sich beim Zusammenfügen beider Kupplungsplatten (1.2, 2.2) ein Labyrinth für etwaige Kriechströme ergibt.

## Claims

1. Atomizer changing system, comprising a master unit (1) and at least one slave unit (2), wherein
the master unit (1) has at least the following components:
a connecting element (1.1) on the master, which surrounds the centre of the master unit (1), for connecting (KS, FS) the master unit (1) to the slave unit (2) in a force-fitting and form-fitting manner, and a coupling plate (1.2) on the master, which is disposed in the centre of the master unit (1) and has a plurality of coupling locations for supplying an atomizer connectable thereto with materials, power and/or items of information; and wherein
the slave unit (2) has at least the following component: a releasable connecting element (2.4) on the slave, for connecting the slave unit (2) to an atomizer,
**characterized in that** the connecting element (1.1) on the master is releasable, the master unit (1) has an adapter (1.3) for connecting the master unit (1) to a hollow wrist of a coating robot, and the slave unit (2) has a coupling plate (2.2) on the slave, for connecting the slave unit (2) to the master unit (1) and to an atomizer, wherein the coupling plate (2.2) on the slave is fixedly connected with lines and/or an adapter plate on the atomizer for supplying the connectable atomizer with materials, power and/or items of information.

2. Atomizer changing system according to Claim 1, wherein the coupling plate (1.2) on the master has a plurality of coupling locations selected from coupling locations for coating agent lines, coupling locations for pneumatic lines, and coupling locations for fibre optic cables.

3. Atomizer changing system according to Claim 2, wherein the coupling locations for coating agent lines are conceived for operation with or without high-voltage, and the coupling locations for pneumatic lines serve for the supply with turbine air, bearing air, bearing air monitoring, shaping air, control air, microphone air, purging air, air for thermal insulation, and braking air.

4. Atomizer changing system according to Claim 3, wherein the coupling location for the bearing air (1.22, 2.22) is embodied in such a way that said coupling location is opened only when the master unit (1) is connected to the slave unit (2).

5. Atomizer changing system according to one or a plurality of Claims 1 to 4, wherein said atomizer changing system is composed substantially of a plastics material which is not electrically conductive.

6. Atomizer changing system according to Claim 5, wherein the slave unit (2) is composed of a plastics material which is not electrically conductive, and the master unit (1) is composed of a plastics material which is not electrically conductive to an extent of at least 95% in terms of the weight of the master unit (1).

7. Atomizer changing system according to one or a plurality of Claims 1 to 6, wherein supplying the atomizer with coating agents takes place by way of lines which carry coating agents and are connected to the coupling plates (1.2, 2.2) by way of high-voltage-resistant threaded connections (1.21, 2.21).

8. Atomizer changing system according to Claim 7, wherein the high-voltage-resistant threaded connections (1.21, 2.21) are embodied without any dead space.

9. Atomizer changing system according to one or a plurality of Claims 1 to 8, wherein the slave unit (2) comprises a data carrier (2.7) which is able to be read by a reading unit (1.7) attached to the master unit (1).

10. Atomizer changing system according to one or a plurality of Claims 1 to 9, wherein the coupling plate (1.2) on the master and the coupling plate (2.2) on the slave are embodied in such a way that a labyrinth for potential leakage currents is created when the two coupling plates (1.2, 2.2) are joined to one another.

## Revendications

1. Système de changement d'atomiseur, comprenant une unité maître (1) et au moins une unité esclave (2), dans lequel
l'unité maître (1) présente au moins les composants suivants :
un élément de liaison (1.1) côté maître, entourant le centre de l'unité maître (1), pour la liaison par adhérence et par complémentarité de forme (KS, FS) de l'unité maître (1) avec l'unité esclave (2), et une plaque d'accouplement (1.2) côté maître, disposée au centre de l'unité maître (1) et pourvue d'une pluralité de points d'accouplement pour alimenter un atomiseur pouvant être raccordé à ceux-ci en substances, en énergie et/ou en informations ; et dans lequel
l'unité esclave (2) présente au moins le composant suivant :
un élément de liaison (2.4) amovible, côté esclave, pour relier l'unité esclave (2) à un atomiseur,
**caractérisé en ce que** l'élément de liaison (1.1) côté maître est amovible, l'unité maître (1) présente un adaptateur (1.3) pour raccorder l'unité maître (1) à une poignée creuse d'un robot de revêtement, et l'unité esclave (2) présente une plaque d'accouplement (2.2) côté esclave pour raccorder l'unité esclave (2) à l'unité maître (1) et à un atomiseur, dans lequel la plaque d'accouplement (2.2) côté esclave est solidaire de conduites et/ou d'une plaque d'adaptation pour l'alimentation de l'atomiseur pouvant être raccordé en substances, en énergie et/ou en informations.

2. Système de changement d'atomiseur selon la revendication 1, dans lequel la plaque d'accouplement (1.2) côté maître dispose d'une pluralité de points d'accouplement choisis parmi des points d'accouplement pour des conduites d'agents de revêtement, des points d'accouplement pour des conduites pneumatiques et des points d'accouplement pour des guides d'ondes optiques.

3. Système de changement d'atomiseur selon la revendication 2, dans lequel les points d'accouplement pour conduites d'agent de revêtement sont conçus pour un fonctionnement avec ou sans haute tension, et les points d'accouplement pour conduites pneumatiques sont conçus pour l'alimentation en airs de turbine, en air de palier, pour la surveillance d'air de palier, d'airs de direction, d'airs de commande, d'airs de microphones, d'air de purge, d'air pour l'isolation thermique et d'air de freinage.

4. Système de changement d'atomiseur selon la revendication 3, dans lequel le point d'accouplement pour l'air de palier (1.22, 2.22) est réalisé de telle sorte qu'il ne s'ouvre que lorsque l'unité maître (1) est reliée à l'unité esclave (2).

5. Système de changement d'atomiseur selon une ou plusieurs des revendications 1 à 4, dans lequel celui-ci est composé substantiellement d'une matière plastique électriquement non conductrice.

6. Système de changement d'atomiseur selon la revendication 5, dans lequel l'unité esclave (2) est composée d'une matière plastique électriquement non conductrice, et l'unité maître (1) est composée jusqu'à concurrence d'au moins 95 % en poids par rapport au poids de l'unité maître (1) d'une matière plastique électriquement non conductrice.

7. Système de changement d'atomiseur selon une ou plusieurs des revendications 1 à 6, dans lequel l'alimentation de l'atomiseur en agents de revêtement est effectuée par des conduites transportant des agents de revêtement, qui sont reliées aux plaques d'accouplement (1.2, 2.2) par l'intermédiaire de vissages (1.21, 2.21) résistant aux hautes tensions.

8. Système de changement d'atomiseur selon la revendication 7, dans lequel les vissages (1.21, 2.21) résistant aux hautes tension sont réalisés sans espace mort.

9. Système de changement d'atomiseur selon une ou plusieurs des revendications 1 à 8, dans lequel l'unité esclave (2) comprend un support de données (2.7) qui peut être lu par un lecteur (1.7) monté sur l'unité maître (1) .

10. Système de changement d'atomiseur selon une ou plusieurs des revendications 1 à 9, dans lequel la plaque d'accouplement (1.2) côté maître et la plaque d'accouplement côté esclave (2.2) sont réalisées de de façon à créer un labyrinthe pour des courants de fuite éventuels lorsque les deux plaques d'accouplement (1.2, 2.2) sont jointes.
